# EUROPÄISCHE PATENTSCHRIFT

(11) **EP 1 109 649 B1**
(45) Veröffentlichungstag und Bekanntmachung des Hinweises auf die Patenterteilung: **13.03.2002**
(21) Anmeldenummer: 99968647.0
(22) Anmeldetag: 03.09.1999
(51) Int. Cl.: B23Q 3/157, B23B 31/30

(54) **WERKZEUGMASCHINE**
MACHINE TOOL
MACHINE-OUTIL

(30) Priorität: 05.09.1998 DE 19840606
(43) Veröffentlichungstag der Anmeldung: 27.06.2001
(73) Patentinhaber: WITZIG & FRANK GmbH, 77652 Offenburg (DE)
(72) Erfinder: BAUMBUSCH, Frank, D-69412 Eberbach (DE); BAUER, Walter, D-75397 Simmozheim (DE)
(74) Vertreter: Dahlkamp, Heinrich-Leo, Dipl.-Ing.
(86) Internationale Anmeldenummer: EP9906479
(87) Internationale Veröffentlichungsnummer: WO0013842

(56) Entgegenhaltungen:
- DE-A- 3 805 527
- DE-A- 4 431 375
- US-A- 5 730 691

## Beschreibung

Die Erfindung bezieht sich auf eine Werkzeugmaschine gemäß Anspruches 1.

Aus der EP 433 248 A2 ist eine gattungsgemäße Werkzeugmaschine mit einem Revolverkopf und einem im Arbeitsraum angeordneten Werkzeugmagazin mit den Merkmalen a und b ersichtlich.

Werkzeugmaschinen mit einem Revolverkopf ermöglichen durch einfaches Drehen des Revolverkopfes einen schnellen Werkzeugwechsel. Die Anzahl der auf einem Revolverkopf angeordneten Werkzeuge ist aber in der Regel auf acht Werkzeuge begrenzt. Für die Serienfertigung, z.B. in sogenannten CNC-gesteuerten Bearbeitungszentren ist es üblich, wenn alle acht auf dem Werkzeugrevolver angeordneten Werkzeuge abgenutzt oder in sonstiger Weise unbrauchbar geworden sind, diese Werkzeuge in einem Arbeitsvorgang von Hand auszuwechseln. Bei Verwendung von Mehrstationenwerkzeugmaschinen kann die Anzahl der zur Verfügung stehenden Werkzeuge zwar durch die Verwendung von mehreren Werkzeugrevolvern entsprechend erhöht werden, das ist aber naturgemäß sehr viel aufwendiger und teurer.

Aus der DE 27 37 225 A1 ist eine Werkzeugmaschine mit einem Revolverkopf zur Aufnahme von Werkzeugen, mit einem koaxialen Trommelmagazin zur Speicherung weiterer Werkzeuge und mit einer selbsttätigen Einrichtung zum Befördern der Werkzeuge vom Magazin in eine Arbeitsposition am Revolverkopf bekannt, wobei im Revolverkopf eine eigene Hubeinrichtung zum Transport der Werkzeuge von und zum Trommelmagazin vorgesehen ist. Diese zusätzliche Hubeinrichtung und auch das eigentliche konzentrisch angeordnete Trommelmagazin benötigen relativ viel Platz. Außerdem ist eine Verfahrbarkeit des Revolverkopfes in X-, Y- und Z-Richtung hierbei nicht vorgesehen.

In der DE-OS 14 77 429 ist eine weitere Werkzeugmaschine mit automatischem Werkzeugwechsel beschrieben, wobei Werkzeugspindel und Werkzeugmagazin auf einem gemeinsamen Schlitten angeordnet sind und das Magazin über der Spindel die Werkzeuge senkrecht zur Spindelachse gerichtet hält. Für den Werkzeugwechsel ist dabei ebenfalls ein eigener Greiferwechselmechanismus vorgesehen, wobei der Greifer die Werkzeuge zunächst in Richtung der Spindelachse aus dem Magazin herausführt, dann in die Spindelachse schwenkt und schließlich wieder in die Spindel einschiebt. Auch diese Art des Werkzeugwechsels ist kompliziert und zeitaufwendig.

Aus der EP 890 402 A1 ist eine hydraulische Spannvorrichtung für die lösbare Präzisionshalterung von Maschinenelementen bekannt, die auch als Hydrodehnspannvorrichtung bezeichnet wird. Diese besitzt achsparallele, insbesondere zylindrische Halteflächen mit elastisch ausbiegbaren Wandteilen, die einen Hohlraum begrenzen, der mit mindestens einer hydraulischen Druckquelle verbunden ist. Die Druckquelle besteht aus einem Kolben, der durch eine in einer Gewindebohrung des Gehäuses angeordnete, handbetätigte Imbusschraube bewegt wird. Eine automatisierte Verstellung der Imbusschraube ist hierbei nicht vorgesehen und würde auch zu höherem Verschleiß und wegen der aufwendigen Ankopplung des Schrauberwerkzeuges zu einer Verlangsamung des Werkzeugwechselprozesses führen.

Die DE 38 05 527 A1 beschreibt schließlich ein Werkzeugwechselsystem mit einer Werkzeugaufnahme, auf der ein Ring zur Betätigung mindestens eines linear beweglichen Hydraulikkolbens zum Spannen und Lösen eines Hydrodehnspannfutters unter Veränderung des Druckes des Hydraulikmediums angeordnet ist. Eine automatische Wirkverbindung dieses Ringes mit einem Werkzeugmagazin mittels der Drehbewegung der Spindel ist hierbei nicht vorgesehen.

Der Erfindung liegt daher die Aufgabe zugrunde eine gattungsgemäße Werkzeugmaschine vorzuschlagen, die einen schnellen, automatischen Werkzeugwechsel zwischen der Werkzeugaufnahme an der Spindel und einem Werkzeugmagazin innerhalb des Arbeitsraumes ermöglicht.

Die Lösung dieser Aufgabe ist im Patentanspruch 1 angegeben. Die Unteransprüche 2 bis 10 enthalten sinnvolle Ausführungsformen dazu.

Erfindungsgemäß werden für den Werkzeugwechsel die Werkzeugaufnahmen der Spindel und des Werkzeugmagazines im Arbeitsraum angeordnet und mit Hilfe einer am Werkzeugmagazin angeordneten Betätigungseinrichtung, die vorzugsweise lediglich aus einem Hubzylinder und einer Führungsbuchse besteht, vorzugsweise in ihrer Längsrichutng von einer Werkzeugaufnahme in die andere Werkzeugaufnahme bewegt. An der Spindel wird erfindungsgemäß eine aus einem Hydrodehnspannfutter bestehende Präzisions-Werkzeugaufnahme angeordnet, die eine sehr hohe Passgenauigkeit ermöglicht.

Eine Besonderheit ist es hierbei, dass die einzelnen Werkzeuge keine eigenen Zwischenhalterungen besitzen, mit denen die Werkzeuge üblicherweise genau an der Werkzeugspindel positioniert werden. Erfindungsgemäß werden die Werkzeuge ohne Zwischenhalterung zwischen Magazin und Spindel bewegt. Der Verzicht auf die sogenannte Zwischenhalterung wird dadurch ermöglicht, dass die Spindel des Revolverkopfes genau an der Werkzeugaufnahme des Werkzeugmagazines positioniert werden kann und vorzugsweise mit einem einfachen Wechselschieber der Werkzeugschaft passgenau in die Werkzeugaufnahme der Spindel eingeschoben werden kann.

Erfindungsgemäß ist weiterhin vorgesehen, dass das Hydrodehnspannfutter automatisch mit Hilfe der Spindel gespannt und gelöst wird. Dazu ist auf der Werkzeugaufnahme der Spindel drehbeweglich ein Ring angeordnet, der zur Veränderung des Druckes des Hydrodehnspannfutters mindestens einen linear beweglichen Hydraulikkolben betätigt. Zur Betätigung des Hydraulikkolbens führt der Ring gegenüber der Werkzeugaufnahme der Spindel eine Relativbewegung aus, indem die Spindel mit der Werkzeugaufnahme gedreht wird und der Ring über eine Verdrehsicherung an der Werkzeugaufnahme des Werkzeugmagazines festgehalten wird. Hierdurch wird auf einfache Weise der Antrieb der Spindel dazu benutzt, um mittels Hydraulikkolben den Druck des Hydraulikmediums zu verändern und das Hydrodehnspannfutter zu lösen oder zu spannen. Der Werkzeugwechsel kann also automatisch und zwar ohne einen manuellen Eingriff im geschlossenen Arbeitsraum innerhalb kürzester Zeit ausgeführt werden.

Es hat sich als günstig erwiesen, zur Veränderung des Druckes im Hydraulikraum den Hydraulikkolben einerseits durch Federkraft nach außen zu drücken und andererseits gegen die Federkraft über die Betätigung des Ringes nach innen zu bewegen.

Der drehbeweglich auf der Werkzeugaufnahme angeordnete Ring kann aus einem Gewindering oder einer Spannmutter bestehen und durch seine Drehbewegung relativ zur Werkzeugaufnahme definiert in axialer Richtung bewegt werden und dabei ein oder mehrere Hydraulikkolben ebenfalls in axialer Richtung bewegen, die damit für eine Veränderung des Druckes am Hydrodehnspannfutter sorgen. Statt eines Gewinderinges, der kontinuierlich und über beliebig viele Drehungen axial bewegt werden kann, kann auch ein Exzenterring verwendet werden, der bei einer Drehbewegung um z.B. 90° den Hydraulikkolben zur Mitte des Hydrodehnspannfutters hin bewegen kann. Alternativ dazu kann das Lösen und Spannen des Hydrodehnspannfutters auch mittels Nut am Spannfutter und Wechslergehäuse bewirkt werden. Der Hydraulikkolben ist dabei bevorzugt radial angeordnet, er kann aber auch beliebig schräg nach innen gerichtet sein.

Die Verwendung des Hydrodehnspannfutters hat den Vorteil, dass die Werkzeuge spielfrei mit einer sehr hohen Wiederholgenauigkeit von ca. 0,002 mm aufgenommen werden können.

Das Werkzeugmagazin wird insbesondere als Rundmagazin mit einer zentralen Drehachse und einem zugehörigen Drehantrieb ausgebildet, wobei achsparallel am Umfang verteilt vorzugsweise vier oder fünf Werkzeugaufnahmen an einer gemeinsamen Brücke angeordnet sind, an der zentral eine in Richtung der Drehachse wirkende Betätigungseinrichtung angreift. Diese zweckmäßig als Hub- bzw. Hydraulikzylinder ausgebildete Betätigungseinrichtung besitzt einen Wechselschieber, der auf am Gehäuse befestigten Führungselementen verschiebbar gelagert ist. Dieser Wechselschieber ist direkt mit dem zentralen Hubzylinder und über die Brücke mit den am Umfang verteilt angeordneten Werkzeugaufnahmen verbunden. Die Brücke verläuft dabei quer zur Drehachse des Werkzeugmagazins und besitzt sternförmig nach außen gerichtete Arme, an denen jeweils zur Werkzeugaufnahme mindestens zwei seitlich am Werkzeug mit Vorspannung anliegende Greifarme und/oder Plattfedern befestigt sind. Außerdem sind in den Armen der Brücke achsparallel zur Drehachse des Werkzeugmagazins verlaufende Führungselemente für die Verschiebung der Werkzeugaufnahmen beim Werkzeugwechsel geführt. An den Führungselementen sind gegen die Betätigungseinrichtung wirkende Druckfedern angeordnet, mit denen die in den Werkzeugaufnahmen des Magazins angeordneten Werkzeuge in das Gehäuse des Werkzeugmagazins gedrückt werden. Für den Werkzeugwechsel werden dann die Werkzeuge mit Hilfe des zentralen Hubzylinders aus dem Gehäuse gegen die Kraft der Druckfeder in die Werkzeugaufnahme der Spindel am Revolverkopf gedrückt. Einerseits wird also das Werkzeug durch die Druckfedern im Werkzeugmagazin gehalten und ist dort durch das Gehäuse gegen Verschmutzung und mechanische Beschädigung geschützt und andererseits wird es durch eine genau definierte vom Hubzylinder ausgeübte Kraft passgenau in das Hydrodehnfutter an der Spindel geschoben.

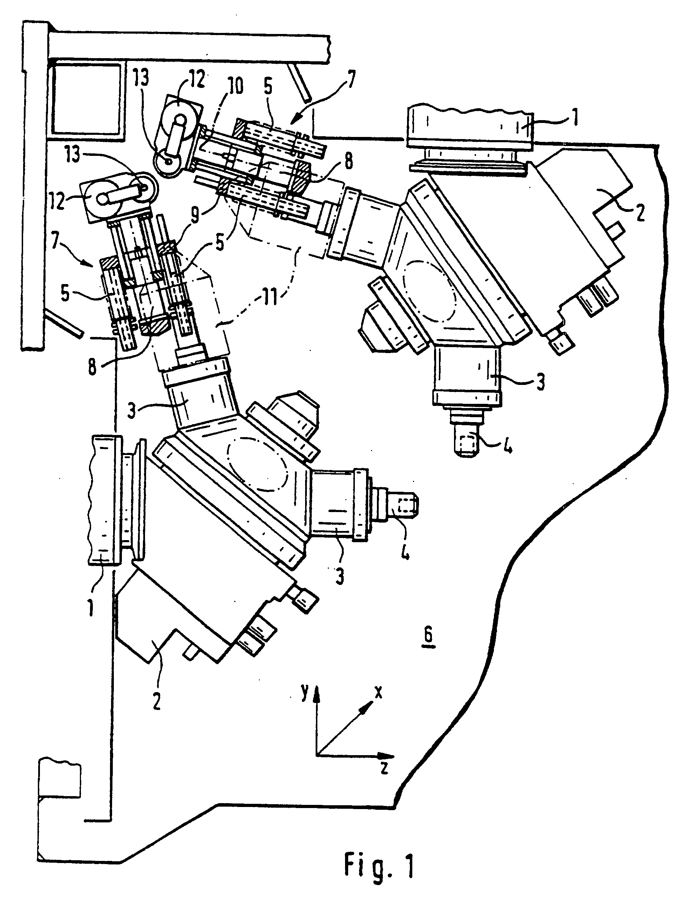

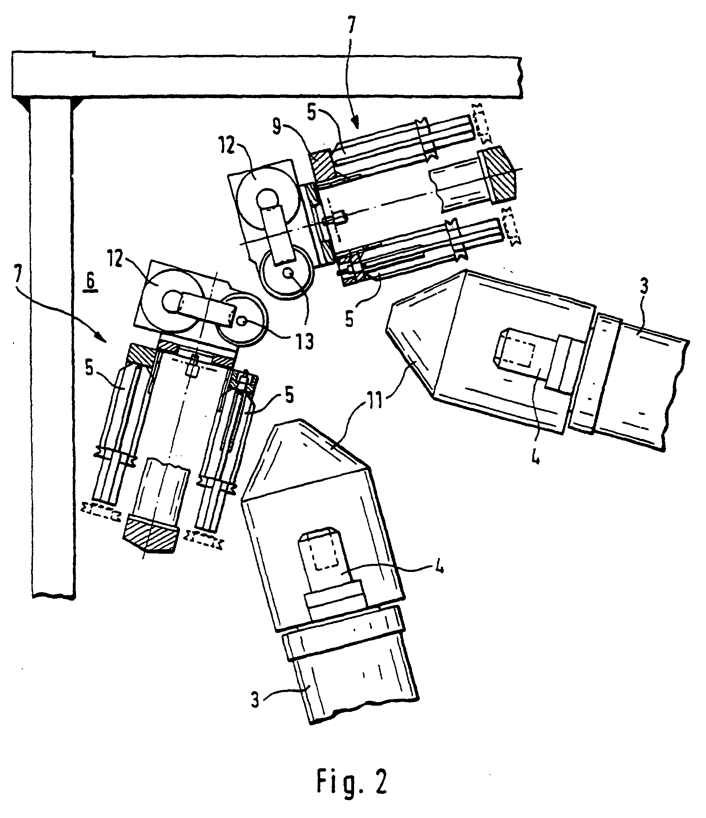

Durch diese Werkzeugwechseleinrichtung können also durch geringes und schnelles Verfahren des Revolverkopfes und eine definierte Bewegung des im Werkzeugmagazin angeordneten Hubzylinders automatisch neben den z.B. acht am Revolverkopf angeordneten Werkzeugen zusätzlich vorzugsweise vier oder fünf Werkzeuge nacheinander aus dem Werkzeugmagazin entnommen werden. Das Werkzeugmagazin ist danach aus einer Wechselposition (vgl. Fig. 1) in eine Ruheposition (vgl. Fig. 2) außerhalb der Außenkontur der am Revolverkopf angeordneten Werkzeuge verschieb- und/oder um eine Kippachse verschwenkbar. Auf diese Weise wird eine Behinderung des Arbeitsvorganges durch das im Arbeitsraum mit dem Revolverkopf verfahrbare Werkzeugmagazin verhindert.

Alternativ zu dem Rundmagazin kann das Werkzeugmagazin auch als mit dem Revolverkopf verfahrbare Kammleiste mit nebeneinander angeordneten Werkzeugaufnahmen ausgebildet sein. Sowohl die als Rundmagazin als auch die als Kammleiste ausgebildeten Werkzeugmagazine können aber auch im Arbeitsraum an ein oder mehreren Seiten am Maschinenständer befestigt sein, wobei für den Werkzeugwechsel die Spindel jeweils in die Wechselposition vor der Werkzeugaufnahme des Werkzeugmagazins gebracht wird.

Die erfindungsgemäßen Merkmale und Vorteile der Werkzeugwechseleinrichtung, z.B. für ein mehrspindliges Zweistationen-CNC-Bearbeitungszentrum lassen sich wie folgt zusammenfassen:
1. Es werden nur die Werkzeugschneiden gewechselt Dadurch können besonders leichte Werkzeuge mit einem geringen Platzbedarf verwendet werden bzw. andererseits kann auf geringem Raum eine große Anzahl von Werkzeugen in dem Werkzeugmagazin untergebracht werden.
2. Die Werkzeuge werden direkt in den Revolver gewechselt mit kurzer Spann zu Spannzeit wird automatisch und ohne Eingriff durch das Bedienungspersonal der Werkzeugwechsel vorgenommen.
3. Der Werkzeugschaft ist zylindrisch ausgeführt und mit Hilfe von als Abstreifring ausgeführten Führungsbuchsen können beim Einführen der Werkzeuge die Späne vom Werkzeugschaft abgestreift werden. Durch Verzicht auf Bohrungen im Klemmdurchmesser wird eine hohe Zentriergenauigkeit erreicht.
4. Die Präzisionswerkzeugaufnahme an der Spindel besitzt ein flüssigkeitsbetätigtes Hydrodehnfutter. Dadurch ist eine spielfreie Aufnahme des Werkzeuges möglich.
5. Auf den Magazinen kann eine Vielzahl von parallel nebeneinanderliegenden Werkzeugen abgelegt werden und der Werkzeugwechsel ist durch einfache Rotations- und/oder Translationsbewegung möglich.
6. Am Rundmagazin sind zwei Abstreiferringe befestigt. Durch den äußeren Ring ist eine Vorzentrierung der Spindel möglich und durch die Bewegung des ersten Ringes auf dem Werkzeugschaft werden Spänepartikel abgestreift.
7. Bei Bedarf können mehrere Revolver mit zugeordneten Werkzeugmagazinen im Arbeitsraum untergebracht und auch die einzelnen Magazine ausgewechselt werden.

Die Erfindung wird anhand der beigefügten Figuren 1 bis 15 beispielsweise näher erläutert. Es zeigen
- Fig. 1: zwei in einem Winkel zueinander stehende Werkzeugmagazine 7 für zwei in einem Arbeitsraum 6 rechtwinklig zueinander angeordnete und in X-, Y- und Z-Richtung unabhängig voneinander verfahrbare Revolverköpfe 2, wobei die Wechseleinrichtungen sich jeweils in Wechselposition befinden,
- Fig. 2: eine gegenüber Fig. 1 vergrößerte Darstellung, wobei die Werkzeugmagazine 7 um die Kippachsen 13 in die Ruhestellung geschwenkt sind,
- Fig. 3: teils im Schnitt ein Werkzeugmagazin 7 mit zwei Werkzeugen 5 in den Werkzeugaufnahmen 9,
- Fig. 4: eine nochmals vergrößerte Darstellung einer Werkzeugaufnahme 9 mit darin angeordnetem Werkzeug 5,
- Fig. 5: die Werkzeugwechseleinrichtung teilweise in der Seitenansicht mit einem im Gehäuse 26 angeordneten Werkzeug 5 und einer davor positionierten Werkzeugaufnahme 4 einer Spindel,
- Fig. 6: einen Schnitt nach der Linie I-I von Fig. 3 durch ein Rundmagazin mit vier Werkzeugaufnahmen,
- Fig. 7: einen Schnitt nach der Linie ll-ll von Fig. 3 und
- Fig. 8: einen Schnitt entsprechend Fig. 7 durch ein Werkzeugmagazin mit fünf Werkzeugaufnahmen,
- Fig. 9: eine Spindelspitze 30 mit Werkzeugaufnahme 4 und darin angeordnetem Hydrodehnspannfutter 29,
- Fig. 10: eine andere Ausführungsform zu Fig. 9,
- Fig. 11: eine Frontansicht zu Fig. 10,
- Fig. 12: einen Schnitt zu Fig. 10 im Bereich des Hydrodehnspannfutters.
- Fig. 13: eine Ansicht des als Kammleiste 40 ausgebildeten, fest am Maschinenständer angeordneten Werkzeugmagazins mit nebeneinander angeordneten Werkzeugaufnahmen 41,
- Fig. 14: ein Werkzeugmagazin nach Fig. 13 mit in eine Gabel 42 eingefahrener Spindelspitze 30 und
- Fig. 15: ein Werkzeugmagazin nach Fig. 13 mit zurückgefahrener Spindelspitze 30.

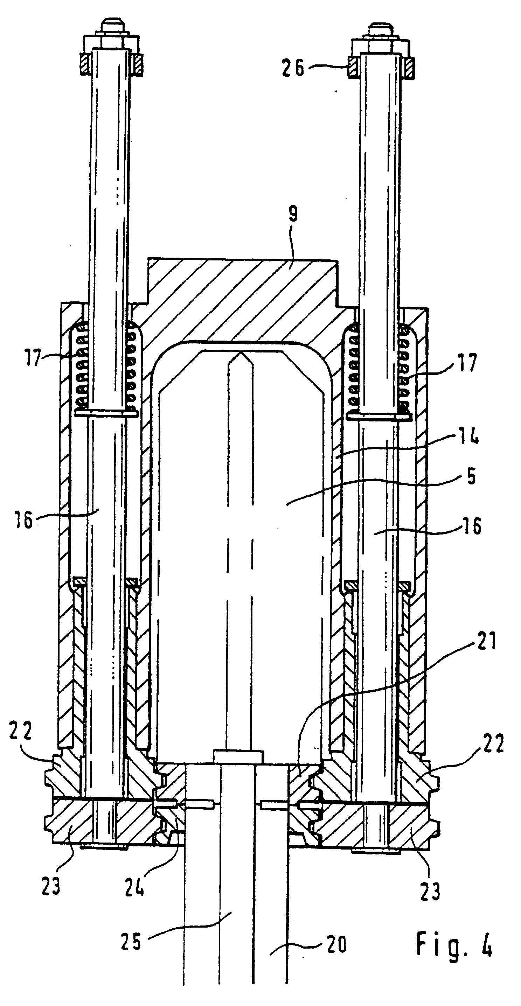

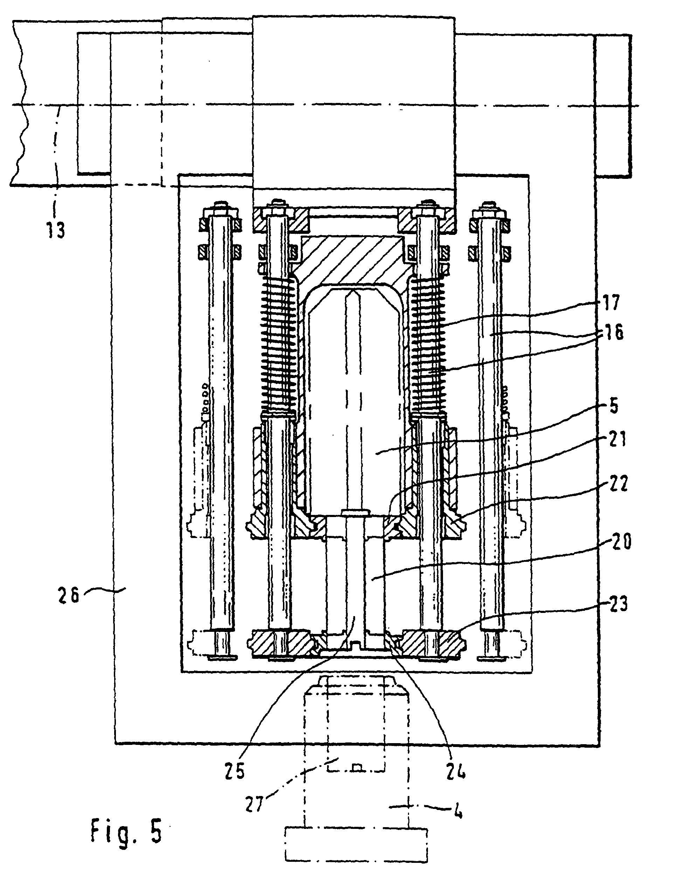

In Fig. 1 sind zwei rechtwinklig zueinander angeordnete Arbeitsspindeln 1 mit jeweils einem über eine Schaltachse drehbar angeordneten Revolverkopf 2 dargestellt. Eine Arbeitsspindel ist dabei an der waagerechten Decke des Arbeitsraumes 6 in den drei Richtungen X, Y und Z und die andere Arbeitsspindel 1 ist an der senkrechten Seitenwand ebenfalls in X-, Y- und Z-Richtung unabhängig von der anderen Arbeitsspindel und gemeinsam mit dem Werkzeugmagazin 7 zumindest über die gesamte X-Achse verfahrbar. Die einzelnen Spindeln 3 der Revolverköpfe 2 können nacheinander in ihre waagerechte bzw. senkrechte Arbeitsposition gedreht werden. Bei der Darstellung nach Fig. 1 sind in der linken oberen Ecke des Arbeitsraumes 6 zwei Werkzeugmagazine 7 angeordnet, die gemeinsam mit dem zugeordneten Revolverkopf in X-Richtung verfahrbar sind. Zum Werkzeugwechsel werden die Revolverköpfe 2 jeweils in Y- und Z-Richtung soweit verfahren, dass eine Werkzeugaufnahme 4 des Revolverkopfes einer Werkzeugaufnahme 9 des in die Wechselposition um die Kippachse 13 geschwenkten Werkzeugmagazines 7 gegenüber steht. Nach entsprechender Zentrierung wird das Werkzeug 5 über die als Hubzylinder ausgebildete Betätigungseinrichtung 8 aus der Werkzeugaufnahme 9 des Werkzeugmagazins 7 in die als Hydrodehnspannfutter ausgebildete Werkzeugaufnahme 4 des Revolverkopfes 2 geschoben. Bei Entlastung des Hubzylinders wird mit Hilfe der in den Figuren 4 und 5 dargestellten Druckfeder 17 die Werkzeugaufnahme 9 in die Ausgangslage zurückbewegt. Nach Beendigung der Werkzeugübergabe an eine Spindel 3 kann das Werkzeugmagazin mit Hilfe des Drehantriebes 12 um die zentrale Drehachse 10 gedreht werden und nach entsprechender Drehung des Revolverkopfes 2 ein erneuter Werkzeugwechsel stattfinden. Nach Beendigung des Werkzeugwechsels können die Werkzeugmagazine 7 um die Kippachse 13 in die in Fig. 2 dargestellte Ruheposition geschwenkt werden, um für die Werkzeuge 5 die erforderliche Außenkontur 11 freizuhalten.

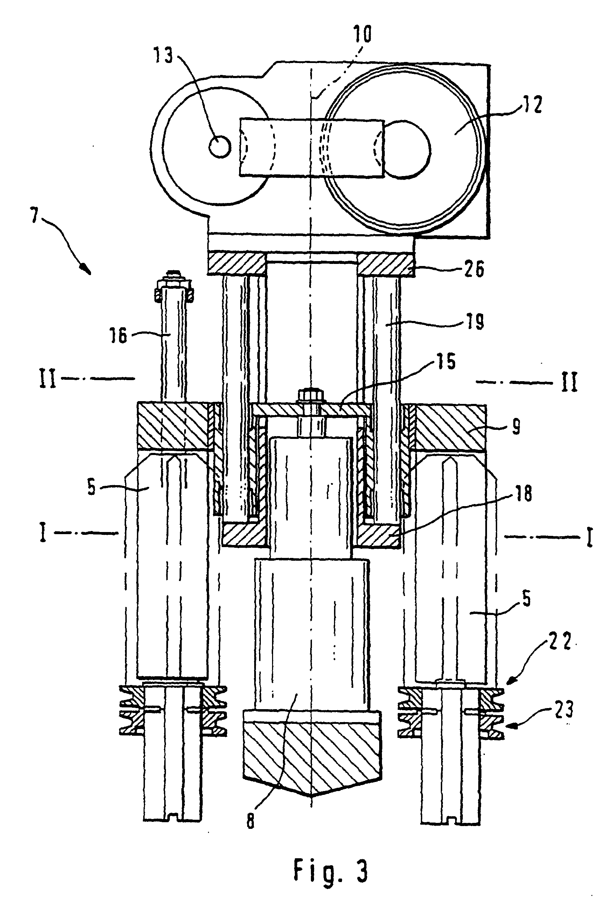

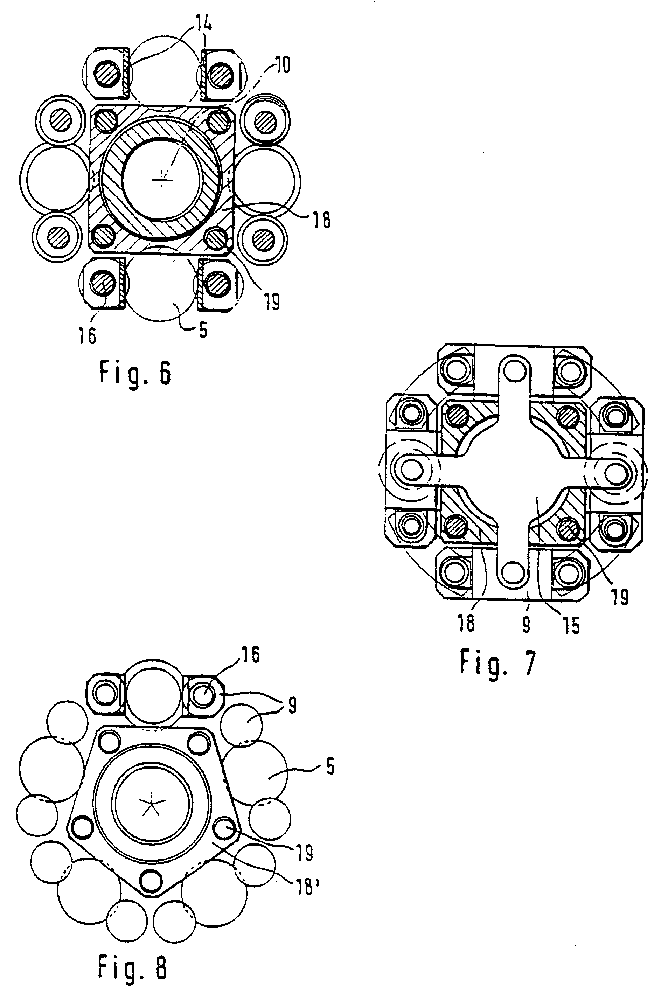

In den Figuren 3 und 4 sind jeweils Werkzeuge 5 im Spannfutter des Werkzeugmagazines 7 dargestellt. Die auf den Führungselementen 16 geführten Druckfedern 17 sind dabei zusammengedrückt (vgl. Fig. 4), sodass einerseits der Aufnahmebund 22 der Werkzeugaufnahme 9 an der Aufnahme 23 anliegt und andererseits der fest am Werkzeugschaft 20 angeordnete Werkzeugbund 21 an der Führungsbuchse 24 anliegt. In Fig. 5 ist im Vergleich dazu die entlastete Position der Druckfedem 17 dargestellt. Dabei ist das gesamte Werkzeug 5 einschließlich des Werkzeugschaftes 20 im Gehäuse 26 des Werkzeugmagazines 7 eingeschlossen und die Aufnahmen 23 und die als Abstreifung ausgebildete Führungsbuchse 24 bilden einen gewissen Schutz gegen das Eindringen von Spänepartikeln. Wie insbesondere aus den Figuren 4 und 6 ersichtlich ist, befinden sich an der Werkzeugaufnahme 9 Plattfedern 14, die sich von zwei Seiten außen gegen die Werkzeuge 5 drücken und damit die Werkzeuge in Position halten.

Nach Positionierung und Zentrierung der Werkzeugaufnahme 4 einer Spindel 3 vor einer Werkzeugaufnahme 9 des Werkzeugmagazines 7 (vgl. Fig. 5) wird durch Betätigung des Hubzylinders 8 das Werkzeug gegen die Federkraft der Druckfedern 17 aus dem Werkzeugmagazin herausgedrückt und in das Hydrodehnspannfutter der Werkzeugaufnahme 4 der Spindel 3 bewegt. Nach Betätigung des Hydrodehnspannfutters kann der Hubzylinder entlastet und gegebenenfalls mit Hilfe der Druckfedern 17 die Werkzeugaufnahme 9 in ihre Speicherposition im Werkzeugmagazin zurückgefahren werden. Wie aus den Figuren 3, 7 und 8 ersichtlich ist, ist die Betätigungseinrichtung 8 bzw. der Hubzylinder zentral im Werkzeugmagazin 7 angeordnet und bewegt die auf den Führungselementen 19 geführte Brücke 15 und den Wechselschieber 18, 18' in Richtung der Drehachse 10.

In den Figuren 6 und 7 sind verschiedene Schnittdarstellungen eines Werkzeugmagazines mit vier Werkzeugaufnahmen 9 dargestellt. Bei dieser Anordnung ist die Brücke 15 im wesentlichen kreuzförmig ausgebildet mit je einem nach außen gerichteten Arm als Verbindung zu den Werkzeugaufnahmen 9. Fig. 8 zeigt ein Werkzeugmagazin mit fünf Aufnahmeplätzen und einen entsprechend ausgebildeten fünfseitigen Wechselschieber 18'. Die dargestellten Werkzeuge 5 weisen jeweils eine Bohrung 25 für die Kühlmittelzufuhr auf. In Fig. 5 ist zusätzlich innerhalb der Werkzeugaufnahme 4 m it 27 ein Freiraum bezeichnet, der bei dem Einschieben des Werkzeugschaftes 20 in das Hydrodehnspannfutter Spänepartikel aufnehmen kann, die der Werkzeugschaft 20 vor sich her geschoben hat.

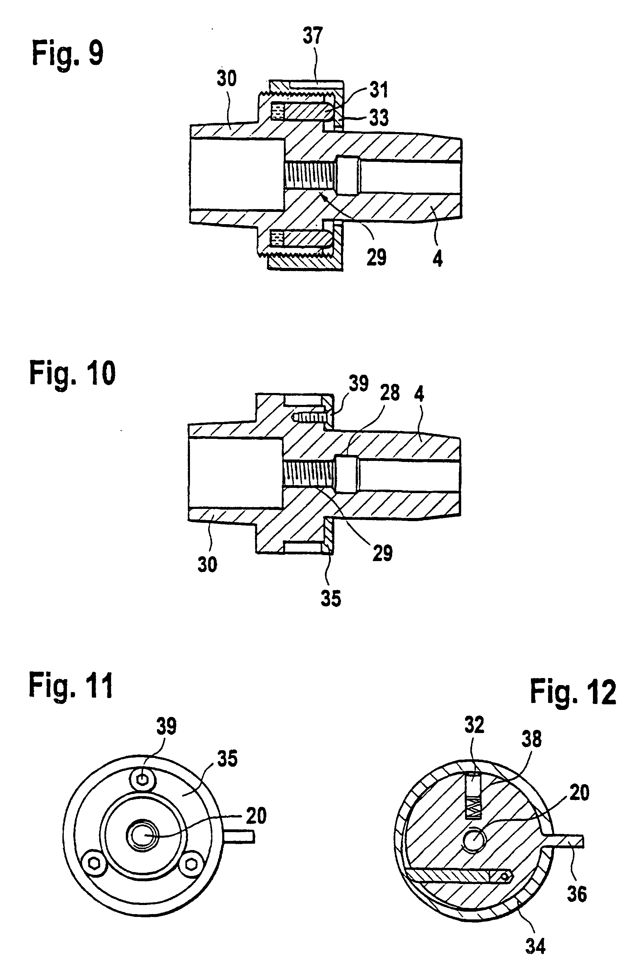

In den Figuren 9 bis 12 sind verschiedene Möglichkeiten zur automatischen Betätigung des Hydrodehnspannfutters 29 mit Hilfe der Spindel 3 dargestellt. Nach Fig. 9 findet das Lösen und Spannen des Hydrodehnspannfutters 29 mit Hilfe eines Gewinderinges 33 statt, der ein oder mehrere Hydraulikkolben 31 in axialer Richtung bewegt und damit Druck auf das Hydraulikmittel ausübt, das die achsparallelen Halteflächen des Hydrodehnspannfutters gegen den Werkzeugschaft 20 presst. Am äußeren Umfang des Gewinderinges 33 ist eine Aussparung 37 dargestellt, die im Zusammenwirken mit entsprechenden Ansätzen an der Werkzeugaufnahme 9 des Werkzeugmagazines 7 als Verdrehsicherung wirkt und damit beim Drehen der Werkzeugaufnahme 4 den Gewindering 33 relativ dazu bewegt.

Bei der alternativen Ausführungsform nach den Figuren 10 bis 12 wird ein Exzenterring 34 im Bereich des Hydrodehnspannfutters 29 drehbeweglich auf der Werkzeugaufnahme 4 angeordnet und mit Hilfe des Halteringes 35 und der Schrauben 39 positioniert. Durch Verdrehen des Exzenterringes 34 wird auf der exzentrisch angeordneten Innenfläche der Hydraulikkolben 32 radial bewegt und sorgt somit für eine Veränderung des Hydraulikdruckes. Als Verdrehsicherung ist auf dem Exzenterring 34 ein Ansatz 36 angeordnet. Der Hydraulikkolben 32 wird Ober eine Feder 38 nach außen gegen die Exzenterfläche des Exzenterringes 34 gedrückt

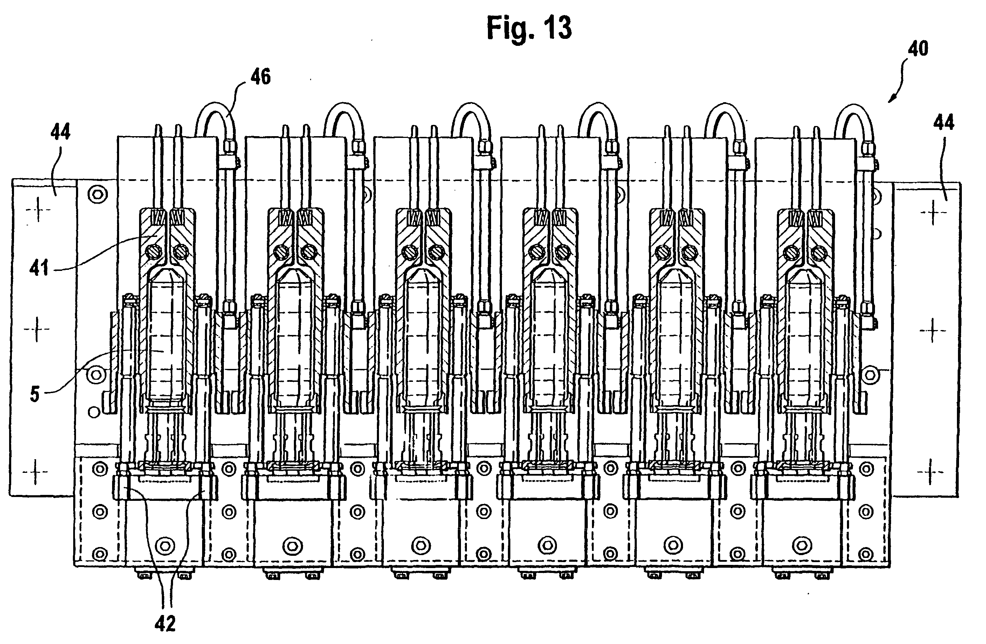

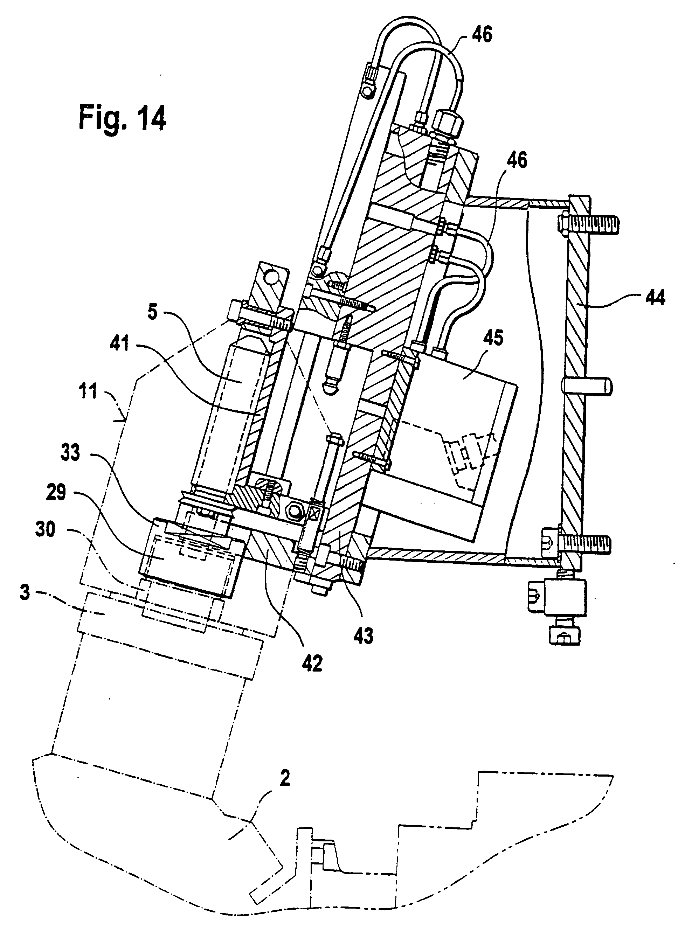

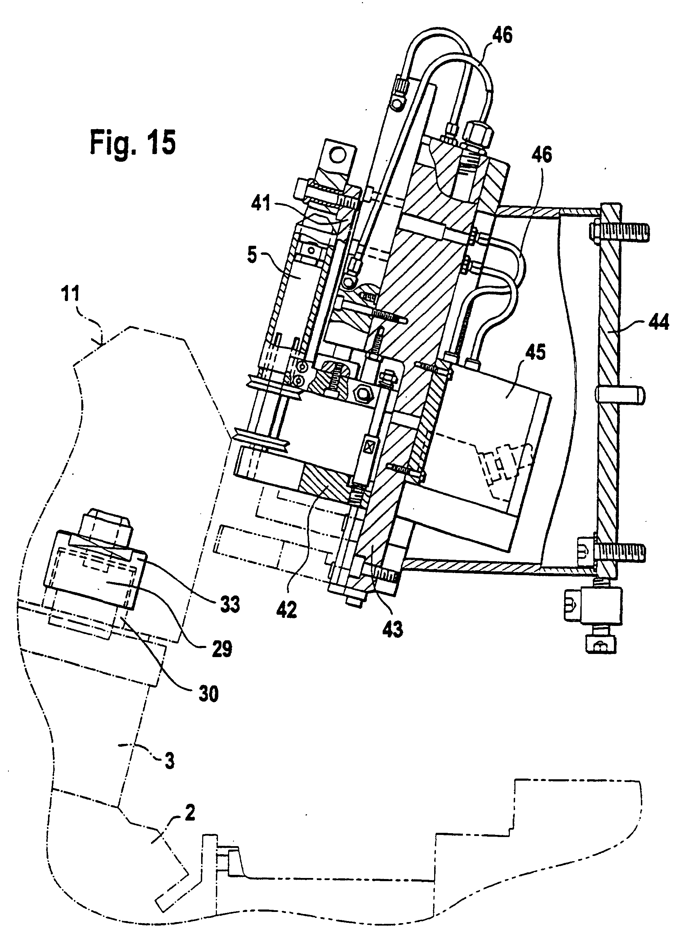

In Fig. 13 ist ein als Kammleiste ausgebildetes Werkzeugmagazin dargestellt, das mit Hilfe eines Trägers 44 am Gehäuse des Arbeitsraumes lösbar befestigt ist. Bei diesem Werkzeugmagazin sind sechs Werkzeugaufnahmen 41 für die Werkzeuge 5 nebeneinander angeordnet. Damit können z.B. alle fünf Werkzeuge eines Werkzeugrevolvers direkt nacheinander ausgetauscht werden, wobei am Werkzeugmagazin üblicherweise ein Leerplatz zur Verfügung steht. Dieses an sich bekannte Werkzeugmagazin besitzt zusätzlich an jeder Werkzeugaufnahmestelle eine Gabel 42, In die der als Spannmutter ausgebildete Gewindering 33 oder der Exzenterring 34 für die Betätigung des Hydrodehnspannfutters 29 hineinbewegt wird. Dabei wird die als Schlüsselfläche ausgebildete Aussparung 37 oder der Ansatz 36 mit der Gabel 42 verbunden und drehgesichert. Durch Drehen der Spindel 3 werden der Gewindering 33 und die Hydraulikkolben 31 axial bewegt und damit das Hydrodehnspannfutter 29 betätigt. Gemäß Figuren 14 und 15 ist zusätzlich zur Befestigung der Kammleiste 40 eine Grundplatte 43 mit dem Träger 44 verbunden. An der Grundplatte 43 sind unter anderem ein Ventilblock 45 und Druckschläuche 46 für die an der Kammleiste 40 angeordneten Betätigungsund Führungseinrichtungen befestigt

### Bezugszeichenliste:

- 1: Arbeitsspindel
- 2: Revolverkopf, Kronenrevolver
- 3: Spindel
- 4: Werkzeugaufnahme an 2 mit Hydrodehnspannfutter
- 5: Werkzeug
- 6: Arbeitsraum
- 7: Werkzeugrundmagazin
- 8: Betätigungseinrichtung für 5; Hubzylinder
- 9: Werkzeugaufnahme an 7, 40
- 10: zentrale Drehachse von 7
- 11: Außenkontur von 5
- 12: Drehantrieb für 7
- 13: Kippachse von 7
- 14: Blattfeder an 9
- 15: Brücke
- 16: Führungselement für die Zentrierung von 5 in 9
- 17: Druckfeder
- 18, 18': Wechselschieber
- 19: Führungselement für 18 bzw. 18'
- 20: Werkzeugschaft
- 21: Werkzeugbund (fest an 20)
- 22: Aufnahmebund an 9 für 21
- 23: Aufnahme an 16 für Zentrierung 24
- 24: Führungsbuchse (auf 20 verschieblich gelagert)
- 25: Bohrung in 5 bzw. 20 für Kühlmittelzufuhr
- 26: Gehäuse von 7 (fest am X-Schlitten)
- 27: Freiraum in 4 (zur Aufnahme von Spänepartikeln)
- 28: Werkzeuggreiferrille
- 29: Hydrodehnspannfutter
- 30: Spindelspitze
- 31: Hydraulikkolben (axial beweglich)
- 32: Hydraulikkolben (radial beweglich)
- 33: Gewindering, Spannmutter
- 34: Exzenterring
- 35: Haltering
- 36: Ansatz für Verdrehsicherung an 34
- 37: Aussparung oder Schlüsselfläche für Verdrehsicherung an 33
- 38: Feder
- 39: Schraube zur Befestigung von 35 an 4
- 40: Kammleiste
- 41: Werkzeugaufnahmen an 40
- 42: Gabel an 7, 40
- 43: Grundplatte von 40
- 44: Träger für 40, 43
- 45: Ventilblock
- 46: Druckschläuche

## Patentansprüche

1. Werkzeugmaschine, insbesondere zur spanenden mindestens dreiachsigen Bearbeitung von Werkstücken mit
a) wenigstens einer Bearbeitungseinheit, die wenigstens eine um eine Drehachse drehend antreibbare Arbeitsspindel (1) aufweist, die vorzugsweise mit einem Revolverkopf (2) versehen ist, der mehrere angetriebene Spindeln (3) aufweist, die jeweils in einer Werkzeugaufnahme (4) ein Werkzeug (5) tragen und im Arbeitsraum (6) in X-, Y- und Z-Richtung verfahrbar sind,
b) wenigstens einem im Arbeitsraum (6) angeordneten Werkzeugmagazin (7, 40) und
c) Betätigungseinrichtungen für den automatischen Wechsel der Werkzeuge (5) ohne Zwischenhalterung direkt von der Werkzeugaufnahme (4) an der Spindel (3) in die Werkzeugaufnahme (9, 41) am Werkzeugmagazin (7, 40) und umgekehrt, **gekennzeichnet durch**
d) eine Werkzeugaufnahme (4) an der Spindel (3) mit einem Hydrodehnspannfutter (29), das automatisch mit Hilfe der Spindel (3) gegen den Werkzeugschaft (20) pressbar ist,
e) einen auf der Werkzeugaufnahme (4) der Spindel (3) drehbeweglich angeordneten Ring (33, 34) zur Betätigung mindestens eines linearbeweglichen Hydraulikkolbens (31/32) zum Spannen und Lösen des Hydrodehnspannfutters (29) unter Veränderung des Druckes des Hydraulikmediums und
f) am Ring (33, 34) angeordnete Elemente für die Verdrehsicherung (36/37), die beim Lösen oder Spannen des Hydrodehnspannfutters (29) **durch** Drehen der Werkzeugaufnahme (4) den Ring (33, 34) an der Werkzeugaufnahme (9, 41) des Werkzeugmagazines (7, 40) festhalten.

2. Werkzeugmaschine nach Anspruch 1, **dadurch gekennzeichnet, dass** zur Veränderung des Druckes im Hydraulikraum der Hydraulikkolben (31, 32) durch Federkraft nach außen gedrückt und durch den Ring (33, 34) gegen die Federkraft nach innen bewegt wird.

3. Werkzeugmaschine nach Anspruch 1 oder 2, **gekennzeichnet durch** einen Gewindering (33), Exzenterring (34) oder Ring mit einer Nut zur Betätigung von axial, radial oder schräg zur Drehachse gerichteten Hydraulikkolben (31, 32).

4. Werkzeugmaschine nach Anspruch 1, 2 oder 3, **dadurch gekennzeichnet, dass** Spindel (3) und Werkzeugmagazin (7,40) im Arbeitsraum gemeinsam verfahrbar und für den automatischen Werkzeugwechsel relativ zueinander bewegbar sind.

5. Werkzeugmaschine nach Anspruch 1, **dadurch gekennzeichnet, dass** das Werkzeugmagazin (7) als Rundmagazin ausgebildet ist und eine zentrale Drehachse (10), einen Drehantrieb (12), achsparallel am Umfang verteilt an einer Brücke (15) angeordnete Werkzeugaufnahmen (9) und eine zentrale in Richtung der Drehachse (10) wirkende Betätigungseinrichtung (8) besitzt.

6. Werkzeugmaschine nach Anspruch 1, **dadurch gekennzeichnet, dass** die Betätigungseinrichtung (8) einen Wechselschieber (18) besitzt, der auf am Gehäuse (26) des Werkzeugmagazines (7, 40) befestigten Führungselementen (19) verschiebbar gelagert ist.

7. Werkzeugmaschine nach Anspruch 5 oder 6, **dadurch gekennzeichnet, dass** das Werkzeugmagazin (7) aus einer Wechselposition (vgl. Fig. 1) in eine Ruheposition (vgl. Fig. 2) außerhalb der Außenkontur (11) der am Revolverkopf (2) angeordneten Werkzeuge (5) verschieb- und/oder um eine Kippachse (13) verschwenkbar ist.

8. Werkzeugmaschine nach einem der Ansprüche 5 bis 7, **dadurch gekennzeichnet, dass** das Werkzeugmagazin (7, 40) Führungselemente (16) für die Verschiebung der Werkzeugaufnahmen (9, 41) beim Werkzeugwechsel besitzt und an den Werkzeugaufnahmen (9, 41) und/oder den Führungselementen (16) gegen die Betätigungseinrichtung (8) wirkende Druckfedern (17) angeordnet sind, die die Werkzeugaufnahmen (9, 41) in ihre Speicherposition im Gehäuse (26) des Werkzeugmagazins (7, 40) drücken.

9. Werkzeugmaschine nach Anspruch 1, **dadurch gekennzeichnet, dass** das Werkzeugmagazin als Kammleiste (40) mit nebeneinander angeordneten Werkzeugaufnahmen (41) ausgebildet ist.

10. Werkzeugmaschine nach Anspruch 1 oder 9, **dadurch gekennzeichnet, dass** das als Rundmagazin oder Kammleiste ausgebildete Werkzeugmagazin im Arbeitsraum (6) an ein oder mehreren Seiten am Maschinenständer befestigt ist.

## Claims

1. Machine tool, especially for the at least triaxial machining of work pieces with
a) at least one machining unit, which has at least one said work spindle (1) which can be rotatably driven around an axis of rotation, is preferably provided with a said revolver head (2) that has a plurality of said driven spindles (3), which carry a said tool (5) in a said tool carrier (4) each and are displaceable in the said work space (6) in X, Y and Z direction;
b) at least one said tool magazine (7, 40) arranged in the said work space (6);
c) said actuating means for the automatic change of the said tools (5) without intermediate holder directly from the said tool carrier (4) at the said spindle (3) into the said tool carrier (9, 41) at the said tool magazine (7, 40) and vice versa; **characterized by**
d) a said tool carrier (4) at the said spindle (3) with a said hydraulic expansion chuck (29), which can be pressed automatically against the said tool shank (20) by means of the said spindle (3);
e) a said ring (33, 34) arranged rotatably movably on the said tool carrier (4) of the said spindle (3) for actuating at least one said linearly movable hydraulic piston (31/32) for tensioning and releasing the said hydraulic expansion chuck (29) while the pressure of the hydraulic medium is changing; and
f) elements arranged on the said ring (33, 34) for the said rotation prevention means (36/37), which fix the said ring (33, 34) at the said tool carrier (9, 41) of the said hydraulic expansion chuck (29) by rotating the said tool carrier (4).

2. Machine tool in accordance with Claim 1, **characterized in that** for the purpose of changing the pressure in the hydraulic space, the said hydraulic piston (32, 32) is pressed to the outside by spring force and is moved in the inward direction by the said ring (33, 34) against the spring force.

3. Machine tool in accordance with Claim 1 or 2, **characterized in that** a said threaded ring (33), a said eccentric ring (34) or a said ring with a slot for actuating said hydraulic pistons (31, 32) directed axially, radially or obliquely in relation to the axis of rotation.

4. Machine tool in accordance with Claim 1, 2 or 3, **characterized in that** the said spindle (3) and the said tool magazine (7, 40) are displaceable together in the work space and are movable in relation to one another for the automatic tool change.

5. Machine tool in accordance with Claim 1, **characterized in that** the said tool magazine (7) is designed as a round magazine and has a said central axis of rotation (10), a said rotating drive (12), said tool carriers (9) arranged axially in parallel distributed over the circumference on a said bridge (15) and a said central actuating means (8) acting in the direction of the said axis of rotation (10).

6. Machine tool in accordance with Claim 1, **characterized in that** the said actuating means (8) has a said change slide (18), which is mounted displaceably on said guide elements (19) fastened on the said housing (26) of the said tool magazine (7, 40).

7. Machine tool in accordance with Claim 5 or 6, **characterized in that** the said tool magazine (7) can be displaced and/or pivoted around a said tilt axis (13) from a change position (see Figure 1) into a resting position (see Figure 2) outside the said outer contour (11) of the said tools (5) arranged on the said revolver head (2).

8. Machine tool in accordance with one of Claims 5 through 7, **characterized in that** the said tool magazine (7, 40) has said guide elements (16) for the displacement of the said tool carriers (9, 41) during the too change and said compression springs (17), which act against the said actuating means (8) and press the said tool carriers (9, 41) into their storage position in the said housing (26) of the said tool magazine (7, 40), are arranged at the said tool carriers (9, 41) and/or at the said guide elements (16)

9. Machine tool in accordance with Claim 1, **characterized in that** the tool magazine is designed as a said cog strip (40) with said tool carriers (41) arranged next to one another.

10. Machine tool in accordance with Claim 1 or 9, **characterized in that** the said tool magazine designed as a round magazine or as a cog strip is fastened in the said work space (6) on one or more slides on the machine column.

## Revendications

1. Machine-outil, en particulier pour l'usinage de pièces par enlèvement de copeaux en au moins trois axes avec
a) au moins une unité d'usinage possédant au moins une broche principale (1) à entraînement par rotation et pivotant autour d'un axe de rotation, qui est munie de préférence d'une tête revolver (2) présentant elle-même plusieurs broches (3) motorisées lesquelles portent chacune un outil (5) dans un raccordement d'outil (4) et sont susceptibles d'être déplacées dans un espace de travail (6) dans le sens X, Y et Z,
b) au moins un magasin d'outils (7,40) disposé dans l'espace de travail (6) et
c) des dispositifs de commande pour le changement automatique des outils (5) sans dispositif de retenue intermédiaire directement du raccordement d'outil (4) de la broche (3) dans le raccordement d'outil (9,41) du magasin d'outils (7,40) et inversement, **caractérisée par**
d) un raccordement d'outil (4) sur la broche (3) avec un mandrin de serrage à expansion hydraulique (29) qui peut être comprimé automatiquement contre la tige de l'outil (20) à l'aide de la broche (3),
e) une bague (33,34) avec mouvement de rotation et disposée sur le raccordement d'outil (4) de la broche (3) pour la commande d'au moins un piston hydraulique (31/32) à mouvement linéaire pour le serrage et le desserrage du mandrin de serrage à expansion hydraulique (29) par modification de la pression du fluide hydraulique et
f) des éléments de fixation anti-torsion (36/37) disposés sur la bague (33,34) et maintenant la bague (33,34) sur le raccordement d'outil (9,41) du magasin d'outils (7,40) par rotation du raccordement d'outil (4) lors du desserrage ou du serrage du mandrin de serrage à expansion hydraulique (29).

2. Machine-outil selon la revendication 1, **caractérisée en ce que** le piston hydraulique (31,32) est poussé vers l'extérieur par la tension du ressort et déplacé vers l'intérieur par la bague (33,34) contre la tension du ressort dans le but de modifier la pression dans le compartiment hydraulique.

3. Machine-outil selon la revendication 1 ou 2, **caractérisée par** une bague filetée (33), une bague excentrique (34) ou une bague avec une rainure pour la commande de pistons hydrauliques (31,32) orientés de manière axiale, radiale ou oblique par rapport à l'axe de rotation.

4. Machine-outil selon la revendication 1, 2 ou 3 **caractérisée en ce que** la broche (3) et le magasin d'outils (7,40) peuvent se déplacer en commun dans l'espace de travail et qu'ils sont mobiles l'un par rapport à l'autre pour le changement automatique des outils.

5. Machine-outil selon la revendication 1, **caractérisée en ce que** le magasin d'outils (7) se présente sous forme de magasin rond et possède un axe de rotation central (10), un moteur de rotation (12), des raccordements d'outil (9) répartis sur le pourtour parallèlement à l'axe et disposés sur un pont (15), et un dispositif de commande (8) central agissant dans le sens de l'axe de rotation (10).

6. Machine-outil selon la revendication 1, **caractérisée en ce que** le dispositif de commande (8) possède un coulisseau de changement (18) qui est logé et peut être déplacé sur des éléments de guidage (19) fixés sur le bâti (26) du magasin d'outils (7, 40).

7. Machine-outil selon la revendication 5 ou 6, **caractérisée en ce que** le magasin d'outils (7) est susceptible d'être déplacé et/ou être pivoté autour d'un axe de basculement (13) d'une position de changement (voir Fig. 1) à une position de repos (voir Fig. 2) en dehors du contour extérieur (11) des outils (5) disposés sur la tête revolver (2).

8. Machine-outil selon une des revendications 5 à 7, **caractérisée en ce que** le magasin d'outils (7,40) possède des éléments de guidage (16) pour le déplacement des raccordements d'outil (9,41) lors du changement d'outils et que des ressorts de pression (17) agissant contre le dispositif de commande (8) sont disposés sur les raccordements d'outil (9,41) et/ou les éléments de guidage (16), lesdits ressorts de pression comprimant les raccordements d'outil (9,41) dans leur position de stockage dans le bâti (26) du magasin d'outils (7,40).

9. Machine-outil selon la revendication 1, **caractérisée en ce que** le magasin d'outils a la forme d'une barre à dents (40) avec raccordements d'outil (41) juxtaposés.

10. Machine-outil selon la revendication 1 ou 9, **caractérisée en ce que** le magasin d'outils se présentant sous forme de magasin rond ou de barre à dents est fixé à un ou plusieurs côtés du montant de la machine dans l'espace de travail (6).
